# EUROPEAN PATENT APPLICATION

(11) **EP 4 822 331 A1**
(43) Date of publication of application: **14.10.2026**
(21) Application number: 25169284.4
(22) Date of filing: 08.04.2025
(51) Int. Cl.: G01N 3/10, G01N 3/36

(54) **HYDRAULIC CREEP TESTING MACHINE**

(71) Applicant: Ecole Polytechnique Fédérale de Lausanne (EPFL), 1015 Lausanne (CH)
(72) Inventor: MARI, Luca, 1030 Bussigny (CH); WYSS, Pierre, 1020 Renens VD (CH)
(74) Representative: reuteler & cie SA

(57) **Abstract**

A hydraulic creep testing machine comprising a pump system (2), an output force regulation system (3), and at least one output cylinder (4) configured to apply a force (F) on a creep test object (100). The output force regulation system (3) comprises an accumulator (6), the accumulator connected to a pump outlet (7) of the pump system via a pump to accumulator circuit portion (8) and connected to the at least one output cylinder (4) via an accumulator to cylinder circuit portion (14). The pump to accumulator circuit portion (8) comprises a pump outlet on-off valve (10) switchable between an on position allowing fluid to flow from the pump system to the accumulator and an off position closing fluid communication between the pump system (2) and the accumulator (6). The accumulator to cylinder circuit portion (14) comprises a cylinder inlet on-off valve (22) switchable between an on position allowing fluid communication between the accumulator and at least one output cylinder, and an off position closing fluid communication between the accumulator and at least one output cylinder. The system is configured such that when the pump outlet on-off valve (10) is open, the cylinder inlet on-off valve (22) is closed and when the cylinder inlet on-off valve (22) is open, the outlet on-off valve (10) is closed.

## Description

The present invention relates to a creep testing machine, in particular with a hydraulic system for generating the applied force.

Creep testing is a widespread method of evaluating material resistance to deformation. A creep test typically consists of applying a constant force on a test object and subsequently measuring its deformation over time. Such tests may run over a long duration, typically in a range from a few weeks to a few months or even up to a year or more. In view of the long duration, the machines that perform creep testing must be very stable. Many machines rely on gravitational force acting on a mass, for instance mounted on a lever arm, coupled to the test object and applying a compression or traction force on the test object. While such creep testing machines are very simple and reliable, they are not well adapted for applying very large forces, or for varying an applied force over the duration of the test in a smooth manner.

It is known to provide hydraulic machines that can provide very large forces in a compact configuration. One of the drawbacks of such machines however is the problem of maintaining the required pressure in the hydraulic circuit, considering that over long durations there is, for instance, a certain pressure loss due to leakage at the sealing interfaces. In order to maintain the required pressure, a pump needs to be activated, however this consumes energy and generates pressure differences that may be transmitted to the test object and adversely affect the creep test measurement.

In view of the foregoing, it is an object of this invention to provide a hydraulic creep testing machine capable of providing a high force over a long duration in a stable manner but with low energy consumption.

It is advantageous to provide a hydraulic creep testing machine which allows a fine and smooth change in the applied force.

It is advantageous to provide a hydraulic creep testing machine which is economical to operate and to maintain.

It is advantageous to provide a hydraulic creep testing machine which is robust and reliable.

Objects of this invention have been achieved by providing a hydraulic creep testing machine according to claim 1. Dependent claims set forth various advantageous features of embodiments of the invention.

Disclosed herein is a hydraulic creep testing machine comprising a pump system, an output force regulation system, and at least one output cylinder configured to apply a force (F) on a creep test object. The output force regulation system comprises an accumulator, the accumulator connected to a pump outlet of the pump system via a pump to accumulator circuit portion and connected to the at least one output cylinder via an accumulator to cylinder circuit portion.

The pump to accumulator circuit portion comprises a pump outlet on-off valve switchable between an on position allowing fluid to flow from the pump system to the accumulator, and an off position closing fluid communication between the pump system and the accumulator.

The accumulator to cylinder circuit portion comprises a cylinder inlet on-off valve switchable between an on position allowing fluid communication between the accumulator and at least one output cylinder, and an off position closing fluid communication between the accumulator and at least one output cylinder.

The system is configured such that when the pump outlet on-off valve is open, the cylinder inlet on-off valve is closed and when the cylinder inlet on-off valve is open, the outlet on-off valve is closed.

In an advantageous embodiment, the accumulator to cylinder circuit portion comprises a pressure sensor.

In an advantageous embodiment, the accumulator to cylinder circuit portion comprises at least one flow control valve.

In an advantageous embodiment, at least one flow control valve is a variable flow control valve configured for variable flow rate or pressure injection of hydraulic fluid into the at least one output cylinder.

In an advantageous embodiment, the accumulator to cylinder circuit portion comprises an accumulator outlet flow control valve and a cylinder inlet flow control valve connected in series between the accumulator and at least one output cylinder.

In an advantageous embodiment, the pump to accumulator circuit portion comprises a pump outlet flow control valve optionally further including a check valve.

In an advantageous embodiment, the pump outlet flow control valve is a variable flow control valve.

In an advantageous embodiment, there are a plurality of output cylinders fluidly connected via the accumulator to cylinder circuit portion to one said accumulator.

In an advantageous embodiment, the output force regulation system comprises a plurality of accumulators and a plurality of associated accumulator to cylinder circuit portions and output cylinders configured for applying forces on a plurality of creep test objects independently.

In an advantageous embodiment, the accumulator is a gas type accumulator.

In an advantageous embodiment, the at least one output cylinder is a single action output cylinder.

In an advantageous embodiment, the on-off valves are solenoid actuated on-off valves.

Further objects and advantageous features of the invention will be apparent from the claims, from the detailed description, and annexed drawings, in which:
Figure 1 illustrates a hydraulic circuit of a creep testing machine according to an embodiment of the invention;
Figure 2 illustrates a hydraulic circuit of another embodiment of a creep testing machine according to the invention;
Figure 3 illustrates a hydraulic circuit of yet another embodiment of a creep testing machine according to the invention;

Referring to the figures, a hydraulic creep testing machine 1 according to embodiments of the invention comprises a pump system 2, an output force regulation system 3 connected to the pump system 2, and at least one output cylinder 4 connected to the output force regulation system 3 and configured for applying a force F on a creep test object 100.

The pump system 2 is a hydraulic pump system for pumping a hydraulic fluid, such as a hydraulic oil, *per se* well known in the field of hydraulic actuated systems. The pump system 2 may for instance comprise, as *per se* well known, an electrical motor M driving a pump 5 connected to a pump outlet 7 where the hydraulic fluid exits at a pumping pressure, which may for instance be in a range of 1.5 to 350 bars, depending on the required force and other characteristics of the machine. As *per se* well known, the pump system 2 may comprise a pressure relief valve 13 that may for instance be a variable pressure relief valve, and an evacuation valve 15 that may for instance be controlled by a solenoid, which may be used to empty the hydraulic circuit or to remove the hydraulic fluid from the hydraulic circuit.

The pump outlet 7 supplies hydraulic fluid under pressure to the output force regulation system 3. The output force regulation system 3 is configured to deliver an accurately controlled flow of hydraulic fluid at a precise hydraulic pressure to one or more output cylinders 4 that apply a force F on the creep test object 100.

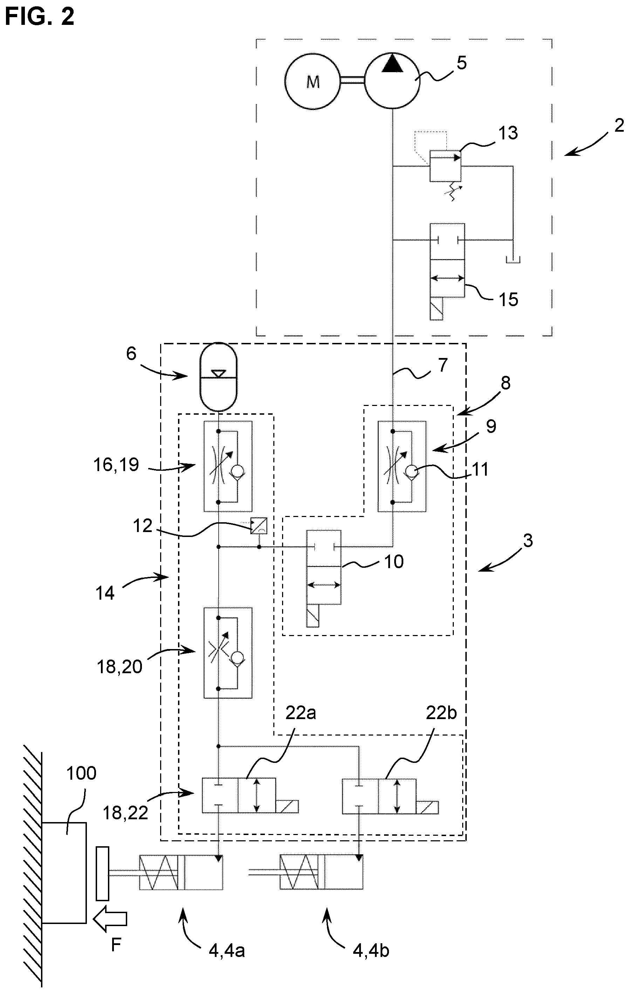

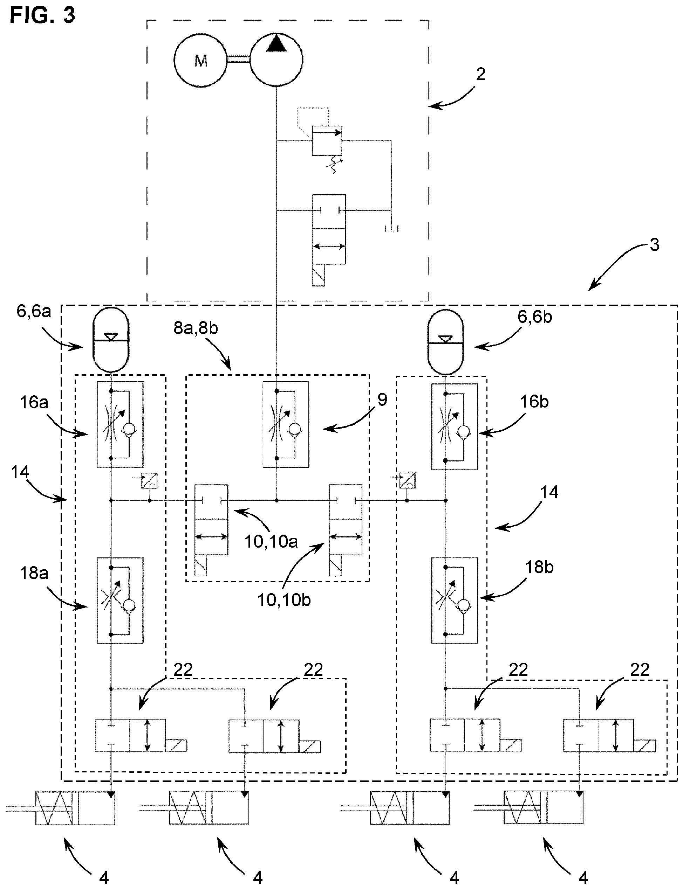

It may be noted that if the hydraulic creep testing machine 1 is provided with a plurality of output cylinders 4, as illustrated in embodiments of figures 2 and 3, two or more output cylinders may be coupled to a same test object, or alternatively may be coupled to different test objects. In the former configuration, the two or more output cylinders apply a force cumulatively on a single test object, and in the latter configuration each output cylinder, or each group of output cylinders, applies a force on different test objects in order to perform creep testing on a plurality of test objects simultaneously.

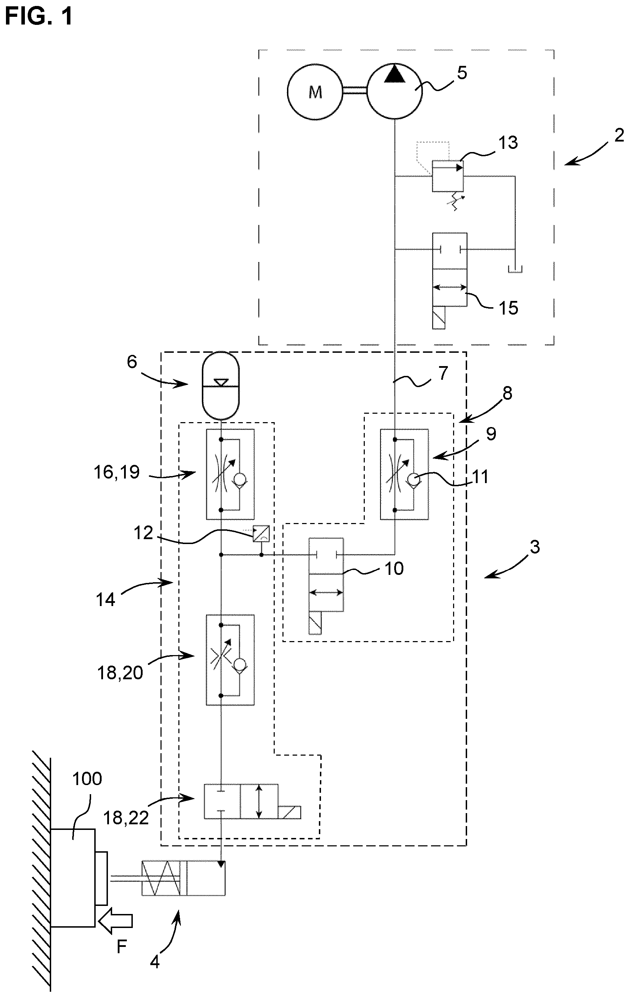

In the simplest configuration illustrated in figure 1, the hydraulic creep testing machine 1 comprises a single output cylinder 4 coupled to the output force regulation system 3, which is configured to supply hydraulic fluid at a defined pressure to the output cylinder 4.

In embodiments, the output force regulation system 3 comprises at least one accumulator 6, at least one pump to accumulator circuit portion 8, and at least one accumulator to cylinder circuit portion 14.

The pump to accumulator circuit portion 8 interconnects the pump outlet 7 to the at least one accumulator 6. The accumulator to cylinder circuit portion 14 interconnects the accumulator 6 to the at least one output cylinder 4.

The accumulator 6 is preferably in the form of a gas accumulator, in which a gas chamber is separated from a hydraulic fluid chamber by a flexible membrane, the gas for instance being nitrogen.

The pump to accumulator circuit portion 8 comprises at least one pump outlet flow control valve 9 which may optionally further include a check valve 11 that allows a return of hydraulic fluid if the downstream pressure is greater than the upstream pressure (the notion of downstream and upstream being the direction of normal flow when the pump 5 is in forward pumping operation).

The pump to accumulator circuit portion 8 may further comprise a pump outlet on-off valve 10 allowing to open and close the connection of the pump system 2 to the accumulator 6.

When the pump outlet on-off valve 10 of the pump to accumulator circuit portion 8 is on, and the pump 5 is on, hydraulic fluid is pumped under pressure into the accumulator 6. The accumulator 6 is filled with hydraulic fluid until a defined pressure set value, measured by a pressure sensor 12, is reached.

The accumulator to cylinder circuit portion 14 comprises an accumulator inlet/outlet circuit portion 16 connected to the inlet and outlet of the accumulator 6 and connected downstream to a cylinder inlet circuit portion 18 that connects to at least one output cylinder 4. The accumulator inlet/outlet circuit portion 16 comprises an accumulator inlet/outlet flow control valve 19 that may include a check valve. When the pump 5 is on and connected through the hydraulic circuit to the accumulator 6, hydraulic fluid passes through the check valve into the accumulator, whereas when the accumulator is pressing hydraulic fluid out towards the output cylinder 4, the hydraulic fluid flows through the accumulator outlet flow control valve 19.

The accumulator outlet flow control valve 19 is preferably a variable flow control valve such that the flow of hydraulic fluid towards the output cylinder 4 may be varied to finely adjust the pressure of the hydraulic fluid in the output cylinder 4.

The accumulator to cylinder circuit portion 14 may further comprise a pressure sensor 12 downstream of the pump outlet on-off valve 10 configured to measure the pressure within the accumulator to cylinder circuit portion 14.

The cylinder inlet circuit portion 18 comprises a cylinder inlet flow control valve 20 which may also comprise a check valve allowing hydraulic fluid to flow back towards the pump system 2, the cylinder inlet flow control valve 20 also preferably being in the form of a variable flow control valve configured to adjust the flow of hydraulic fluid towards the output cylinder 4.

The accumulator 6 thus connects to the output cylinder 4 via at least one, but preferably two flow control valves arranged in series, each having a variable flow control valve, although in variants it is possible to have only one flow control valve between the accumulator 6 and output cylinder 4, or in case there are plurality of flow control valves, only one may be variable in order to adjust the flow of hydraulic fluid to the output cylinder.

In variants, it is also possible to have a plurality of flow control valves that is greater than two arranged in series between the accumulator 6 and the at least one output cylinder 4.

The cylinder inlet circuit portion 18 further comprises a cylinder inlet on-off valve 22 connected to the at least one output cylinder 4 configured to disconnect the inlet of the output cylinder 4 to the cylinder inlet circuit portion 18 when the output cylinder is at a stable set value of pressure defined for the application of a defined force on the creep test object 100. During operation, if the pressure in the output cylinder 4 drops below a threshold set value and requires replenishing, the cylinder inlet on-off valve 22 is switched on, for instance by means of actuation of a solenoid (such on-off valves being *per se* well known), then hydraulic fluid from the accumulator 6 is injected into the output cylinder. The hydraulic fluid passes through the flow control valves 19, 20 which can be controlled to adjust the amount of hydraulic fluid injected into the output cylinder 4 with a fine adjustment, such that the applied force may be finely regulated, for instance at values of variation less than 1 kN. The injection of hydraulic fluid from the accumulator 6 into the output cylinder 4 may also be performed if an increase in the applied force on the test object is desired. This allows an increase in the applied force over time for certain creep tests which require an increased force over time.

Advantageously, the pump system 2 is decoupled from the output cylinder 4 and serves only to fill the accumulator 6 such that variations in pumping pressure and inadequate fine control of pumping pressure does not affect the applied force on the creep test object 100 from the output cylinder 4.

Rather, the pressure in the output cylinder 4 may be finely controlled by the release of hydraulic fluid from the accumulator through the one or more flow control valves 19, 20 when needed.

Therefore, during filling of the accumulator 6, the on-off valve 10 in the pump to accumulator circuit portion 8 is on and the cylinder inlet on-off valve 22 is closed. Conversely, in a configuration where the output cylinder is being filled to increase the pressure therein, the pump outlet on-off valve 10 in the pump 2 accumulator circuit portion 8 is closed and the cylinder inlet on-off valve 22 is open. Since the accumulator 6 supplies a substantially constant stable pressure when injecting small amounts of hydraulic fluid into the output cylinder 4, pressure variations in the output cylinder and corresponding applied force on the creep test object 100 may be smoothly and finely adjusted.

In the embodiment of figure 2, the accumulator to cylinder circuit portion 14 comprises a first cylinder inlet on-off valve 22a and a second cylinder inlet on-off valve 22b, each connected to a separated output cylinder, namely a first output cylinder 4a and the second output cylinder 4b. As mentioned previously, each of the first and second output cylinders can either be connected to separate respective creep test objects, or may be coupled to a same common test object and apply the force cumulatively. In the former case, the creep test machine may be thus used to perform a creep test on two separate test objects simultaneously using a common pump system 2 and a common accumulator 6. This configuration may be replicated such that three or more than three outputs cylinders are coupled to the accumulator to cylinder circuit portion 14 via cylinder inlet on-off valves 22a, 22b.

Since the replenishment of hydraulic fluid in an output cylinder occurs only for small periods of time spaced apart by long pauses in the overall duration of the creep test, the plurality of output cylinders can be replenished or increased in pressure at different times without interference between output cylinders. Each output cylinder 4 is connected to the cylinder inlet circuit portion 18 via its own cylinder inlet on-off valve 22 such that only a single one of the plurality of cylinder inlet on-off valves is switched on, the others being switched off, during a replenishment or pressure increase in one of the output cylinders. Since only one of the plural cylinder inlet on-off valves is open at any point in time, or all are switched off when none of the cylinders are being replenished or increased in pressure, the plurality of output cylinders 4 connected to the common accumulator 6 are isolated from each other. Thus, for instance, in case of rupture of one creep test object, the abrupt change in pressure in one of the output cylinders does not affect the pressures in the other output cylinders.

In a further embodiment illustrated in figure 3, the common pump system 2 may be connected to a plurality of accumulators, in the embodiment illustrated there being two accumulators, namely a first accumulator 6a and a second accumulator 6b.

Each of the accumulators may be connected to an accumulator inlet/outlet circuit portion 16 such that the pump system may supply hydraulic fluid to these two separate accumulators and accumulator to cylinder circuit portions separately. It may be noted that during the filling of the first and second accumulators 6a, 6b, this can either be done simultaneously with the pump outlet on-off valves 10 on both of the pump to accumulator circuit portions 8a, 8b open, or separately at different times which may represent the typical situation, allowing also the accumulators to be filled at different levels and at different pressures.

The accumulators 6a, 6b may also have different sizes and volumes or different force levels and applications. It may be noted that there may be more than two accumulators and corresponding accumulator to cylinder circuit portions connected to a common single pump system 2 using the same principle as discussed herein.

The accumulator inlet/outlet circuit portions 16 and cylinder circuit portion 18 of each accumulator to cylinder circuit portion 14 connected to a corresponding accumulator 6, may have a similar configuration as described above in relation to the embodiment of figures 1 and 2.

Each accumulator to cylinder circuit portion is preferably provided with a pressure sensor. For instance in the case there are two accumulators 6a, 6b as illustrated in figure 3, a first pressure sensor 12a is coupled to the circuit portion connected to the first accumulator 6a and a second pressure sensor 12b is coupled to the circuit portion connected the second accumulator 6b.

### List of references used

### Hydraulic creep testing machine 1

**Pump system 2**
   Motor M
   Pump 5
   Pressure relief valve 13
   Evacuation valve 15
   Pump outlet 7
**Output force regulation system 3**
   Pump to accumulator circuit portion 8, 8a, 8b
      **Pump outlet flow control valve 9**
         including a check valve 11
      **Pump outlet On-off valve 10**
         First pump outlet on-off valve 10a
         Second pump outlet on-off valve 10b
   **Accumulator 6**
      First accumulator 6a
      Second accumulator 6b
**Accumulator to cylinder circuit portion 14**
   **Pressure sensor 12**
      First pressure sensor 12a
      Second pressure sensor 12b
   **Accumulator inlet/outlet circuit portion 16**
      Accumulator outlet flow control valve 19
   **Cylinder inlet circuit portion 18**
      Cylinder inlet flow control valve 20
         First Cylinder inlet flow control valve 20a
         Second Cylinder inlet flow control valve 20b
      Cylinder inlet On-off valve 22
         First Cylinder inlet On-off valve 22a
         First Cylinder inlet On-off valve 22b
**Output cylinder 4**
   First output cylinder 4a
   Second output cylinder 4b
Creep test object 100

## Claims

1. A hydraulic creep testing machine comprising a pump system (2), an output force regulation system (3), and at least one output cylinder (4) configured to apply a force (F) on a creep test object (100),
wherein the output force regulation system (3) comprises an accumulator (6),
the accumulator connected to a pump outlet (7) of the pump system via a pump to accumulator circuit portion (8) and connected to the at least one output cylinder (4) via an accumulator to cylinder circuit portion (14),
the pump to accumulator circuit portion (8) comprising a pump outlet on-off valve (10) switchable between an on position allowing fluid to flow from the pump system to the accumulator and an off position closing fluid communication between the pump system (2) and the accumulator (6),
the accumulator to cylinder circuit portion (14) comprising a cylinder inlet on-off valve (22) switchable between an on position allowing fluid communication between the accumulator and at least one output cylinder, and an off position closing fluid communication between the accumulator and at least one output cylinder,
the system configured such that when the pump outlet on-off valve (10) is open, the cylinder inlet on-off valve (22) is closed and when the cylinder inlet on-off valve (22) is open, the outlet on-off valve (10) is closed.

2. The hydraulic creep testing machine of claim 1 wherein the accumulator to cylinder circuit portion (14) comprises a pressure sensor (12).

3. The hydraulic creep testing machine of any preceding claim wherein the accumulator to cylinder circuit portion (14) comprises at least one flow control valve (19, 20).

4. The hydraulic creep testing machine of the preceding claim wherein at least one flow control valve is a variable flow control valve configured for variable flow rate or pressure injection of hydraulic fluid into the at least one output cylinder.

5. The hydraulic creep testing machine of any preceding claim wherein the accumulator to cylinder circuit portion (14) comprises an accumulator outlet flow control valve (19) and a cylinder inlet flow control valve (20) connected in series between the accumulator (6) and at least one output cylinder (4).

6. The hydraulic creep testing machine of any preceding claim wherein the pump to accumulator circuit portion (8) comprises a pump outlet flow control valve (9) optionally further including a check valve (11).

7. The hydraulic creep testing machine of the preceding claim wherein the pump outlet flow control valve (9) is a variable flow control valve.

8. The hydraulic creep testing machine of any preceding claim wherein there are a plurality of output cylinders (4) fluidly connected via the accumulator to cylinder circuit portion (14) to one said accumulator (6).

9. The hydraulic creep testing machine of any preceding claim wherein the output force regulation system (3) comprises a plurality of accumulators and a plurality of associated accumulator to cylinder circuit portions (14) and output cylinders (4) configured for applying forces on a plurality of creep test objects independently.

10. The hydraulic creep testing machine of any preceding claim wherein the accumulator (6) is a gas type accumulator.

11. The hydraulic creep testing machine of any preceding claim wherein the at least one output cylinder (4) is a single action output cylinder.

12. The hydraulic creep testing machine of any preceding claim wherein the on-off valves are solenoid actuated on-off valves.
